# EUROPÄISCHE PATENTANMELDUNG

(11) **EP 3 815 883 A2**
(43) Veröffentlichungstag der Anmeldung: **05.05.2021**
(21) Anmeldenummer: 20200532.8
(22) Anmeldetag: 07.10.2020
(51) Int. Cl.: B29C 65/40, B29C 65/00, B29C 48/02

(54) **HANDSCHWEISSEXTRUDERANORDNUNG MIT EINEM HANDSCHWEISSEXTRUDER FÜR DAS STOFFSCHLÜSSIGE VERBINDEN THERMOPLASTISCHER BAUTEILE**

(30) Priorität: 09.10.2019 DE 202019105569 U
(71) Anmelder: Munsch Kunststoff-Schweißtechnik GmbH, 56221 Ransbach-Baumbach (DE)
(72) Erfinder: MUNSCH, Stefan, 56237 Wirscheid (DE)
(74) Vertreter: Angerhausen, Christoph

(57) **Zusammenfassung**

Die Erfindung betrifft eine Handschweißextruderanordnung mit einem Handschweißextruder (1) für das stoffschlüssige Verbinden thermoplastischer Bauteile, dadurch gekennzeichnet, dass der Handschweißextruder (1) eine bidirektionale Datenschnittstelle (2) für die drahtlose oder drahtgebundene bidirektionale Kommunikation mit einem Endgerät (3) aufweist

## Beschreibung

Die Erfindung betrifft eine Handschweißextruderanordnung mit einem Handschweißextruder für das stoffschlüssige Verbinden thermoplastischer Bauteile. Eine derartige Handschweißextruderanordnung ist aus der DE 10 2011 101 619 B4 bekannt.

Das Extrusionsschweißen findet vor allem im Apparate-, Behälter-, Rohrleitungs-, Tief- und Kanalbau Anwendung und ist ein im Wesentlichen manuell ausgeführtes Schweißverfahren unter Verwendung eines in dem Extruder plastifizierten Zusatzwerkstoffes. Dabei tritt der Schweißzusatz strangförmig aus einer Plastifiziereinheit des Extruders aus und wird zur Erzeugung einer stoffschlüssigen Verbindung in die vorplastizierte Nahtfuge zwischen zu verschweißenden Bauteilen eingebracht. Die Erwärmung des Grundwerkstoffes an den Fugenflanken der zu verschweißenden Bauteile erfolgt häufig mittels Heißluft. Die Fugenflanken werden dabei so weit aufgeschmolzen, dass die Materialien des Grundwerkstoffes und des plastifizierten Zusatzwerkstoffs ineinander fließen, so dass nach dem Abkühlen der Schweißnaht eine stoffschlüssige Verbindung entsteht.

Die Qualität der erzeugten Schweißnaht ist in hohem Maße von den vorgefundenen Materialeigenschaften der miteinander zu verschweißenden Bauteile sowie des verwendeten Zusatzwerkstoffes und der voreingestellten Betriebsparameter des Extrusionsschweißgerätes abhängig. Häufig basieren die voreingestellten Betriebsparameter des Schweißgeräts auf Erfahrungswerten des Bedieners, so dass reproduzierbare, qualitativ hochwertige Schweißnähte häufig nur von erfahrenen Bedienern hergestellt werden können.

Es ist daher die Aufgabe der Erfindung, eine Handschweißextruderanordnung der eingangs beschriebenen Art derart weiterzuentwickeln, dass sie auch unerfahrenen Benutzern die Herstellung qualitativ hochwertiger Schweißnähte in reproduzierbarer Weise ermöglicht.

Diese Aufgabe wird durch eine Handschweißextruderanordnung mit den Merkmalen des Anspruchs 1 gelöst. Die abhängigen Ansprüche betreffen jeweils vorteilhafte Ausführungsformen der Erfindung. Demgemäß ist vorgesehen, dass der Handschweißextruder eine bidirektionale Datenschnittstelle für die drahtlose oder drahtgebundene bidirektionale Kommunikation mit einem Endgerät aufweist. Das Endgerät kann beispielsweise ein mobiles Endgerät sein, beispielsweise ein Personal Computer, ein Laptop oder ein Smartphone.

Das Endgerät kann eine zu der Datenschnittstelle des Handschweißextruders komplementäre Datenschnittstelle aufweisen. Beispielsweise können beide Geräte miteinander kompatible Bluetooth-Schnittstellen für den Austausch von Datensätzen aufweisen.

Mit Hilfe der bidirektionalen Datenschnittstelle ist es dem Handschweißextruder möglich, beispielsweise während des Schweißprozesses erfasste Betriebsparameter einem externen Datenspeicher beziehungsweise einer externen Datenverarbeitungseinheit, beispielsweise einem Endgerät, zur Verfügung zu stellen, damit über diese externe Datenverarbeitungseinheit in einem nachgelagerten Schweißvorgang die gespeicherten Prozessparameter bedarfsweise zur Verfügung gestellt werden können. Dabei kann das Endgerät auch dazu vorgesehen sein, die hinterlegten Betriebsparameter des Handschweißextruders dem Handschweißextruder für nachfolgende Schweißprozesse als Vorgabewerte zur Verfügung zu stellen und/oder zu manipulieren bzw. durch ergänzende Informationen zu erweitern oder zu kommentieren.

Die Handschweißextruderanordnung kann für die Überwachung eines von dem Handschweißextruder ausgeführten Schweißprozesses eingerichtet sein, wozu mindestens ein Datensatz aufweisend mindestens eines von Schweißparameter, Betriebsparameter und Umgebungstemperatur zwischen dem Handschweißgerät und dem Endgerät kommuniziert ist. Dafür kann der Datensatz über die bidirektionale Datenschnittstelle kommuniziert werden.

Auf dem Endgerät kann eine Applikation ausgeführt sein, die dazu eingerichtet ist, den Datensatz von dem Endgerät an den Handschweißextruder zu übertragen.

Analog kann die auf dem Endgerät ausgeführte Applikation dazu eingerichtet sein, den Datensatz über die Datenschnittstelle bei dem Handschweißextruder anzufordern und von dem Handschweißextruder an das Endgerät zu übertragen.

Auf dem Endgerät kann weiterhin eine Applikation ausgeführt sein, die dazu eingerichtet ist, einen Datensatz von dem Endgerät an den Handschweißextruder zu übertragen, der mindestens einen Steuerbefehl zur Ansteuerung des Handschweißextruders aufweist.

Der Steuerbefehl zur Ansteuerung des Handschweißextruders kann eine Soll-Temperatur oder eine Soll-Lüfterdrehzahl eines Vorwärmgebläses des Handschweißextruders aufweisen. Der Steuerbefehl soll jedoch nicht auf derartige Prozessparameter beschränkt sein und kann insbesondere sämtliche Vorgaben des Extrusionsschweißvorgangs oder eine beliebige Teilmenge dieser umfassen.

Der Handschweißextruder und/oder das Endgerät, vorzugsweise eine auf dem Endgerät ausgeführte Applikation, kann dazu eingerichtet sein, kontinuierlich oder über einen definierten Zeitraum während eines Schweißprozesses Prozessparameter und gegebenenfalls weitere Prozessdaten aufzuzeichnen und in einem Speicher für den Abruf im Nachgang zum Schweißprozess zu hinterlegen.

Der Handschweißextruder kann an ein externes und bedarfsweise mit dem Handschweißextruder koppelbares Speichermedium angeschlossen sein. Dabei kann das Speichermedium eine Speicherkarte sein und der Handschweißextruder einen Speicherkartenleser aufweisen, in den die Speicherkarte wahlweise eingesteckt werden kann, um die Speicherkarte für einen Lese- und/oder Schreibvorgang mit dem Handschweißextruder zu koppeln. Das Speichermedium kann alternativ fest in den Handschweißextruder integriert, etwa mit einer Regel- und Steuereinheit des Handschweißextruders verbunden sein und gegebenenfalls als ein zusätzlicher Speicher dienen.

Der Handschweißextruder kann an einem Extruderausgang eine Lichtquelle mit einstellbarer Lichtintensität aufweisen. Dabei kann der Lichtaustritt der Lichtquelle in Richtung einer zu erzeugenden Schweißnaht geöffnet sein. Vorzugsweise weist die Lichtquelle eine Dual-LED-Beam-Beleuchtung auf oder sie ist als eine solche ausgebildet.

Der Handschweißextruder kann mindestens ein Bedienelement aufweisen, das als ein Drehgeber oder als ein Drehencoder ausgebildet ist.

Der Handschweißextruder kann einen bürstenlosen Vorwärmlüfter aufweisen, wodurch der Vorwärmlüfter eine besonders hohe Langlebigkeit aufweist.

Der Handschweißextruder kann für die beidhändige Bedienung in zwei um 180° um die Längsachse des Handschweißextruders zueinander verdrehten Ausrichtungen ausgelegt sein. Dabei kann der Handschweißextruder einen ersten Satz von zwei Bediengriffen für die beidhändige Bedienung und einen zweiten Satz von zwei Bediengriffen für die beidhändige Bedienung in den beiden um 180° zueinander verdrehten Ausrichtungen aufweisen.

Der erste Satz von zwei Bediengriffen kann einen ersten Bediengriff an einer von dem Extruderausgang abgewandten Hinterseite des Handschweißextruders und einen zweiten sich von einer seitlichen Längsseite erstreckenden Bediengriff aufweisen.

Der zweite Satz von zwei Bediengriffen kann einen ersten Bediengriff, der sich von einer von dem Extruderausgang abgewandten Hinterseite des Handschweißextruders erstreckt, und einen zweiten Bediengriff aufweisen, der an einer unteren Längsseite und Aufstandsseite des Handschweißextruders angeordnet ist.

Der an der unteren Längsseite und Aufstandsseite des Handschweißextruders angeordnete zweite Bediengriff kann eine Auflagefläche aufweisen, die mit mindestens einer weiteren Auflagefläche der Aufstandsseite in einer die untere Längsseite und Aufstandsseite bildenden gemeinsamen Ebene liegt.

Der an der Längsseite und Aufstandsseite des Handschweißextruders angeordnete zweite Bediengriff kann an einem Übergang zwischen der Aufstandsseite und einer Vorderseite des Handschweißextruders, die den Extruderausgang aufweist, angeordnet sein.

Der Handschweißextruder kann ein Gehäuse aufweisen und der an der Längsseite und Aufstandsseite des Handschweißextruders angeordnete zweite Bediengriff kann einteilig an das Gehäuse angeformt sein. Das Gehäuse kann ein Spritzgussformteil sein.

Weitere Einzelheiten der Erfindung werden anhand der nachstehenden Figuren erläutert. Dabei zeigt:
Figur 1 eine beispielhafte Ausführungsform einer erfindungsgemäßen Handschweißextruderanordnung;
Figur 2 eine Vorderansicht des Handschweißextruders der Ausführungsform gemäß Figur 1; und
Figur 3 eine perspektivische Seitenansicht von unten auf den Handschweißextruder gemäß den Figuren 1 und 2.

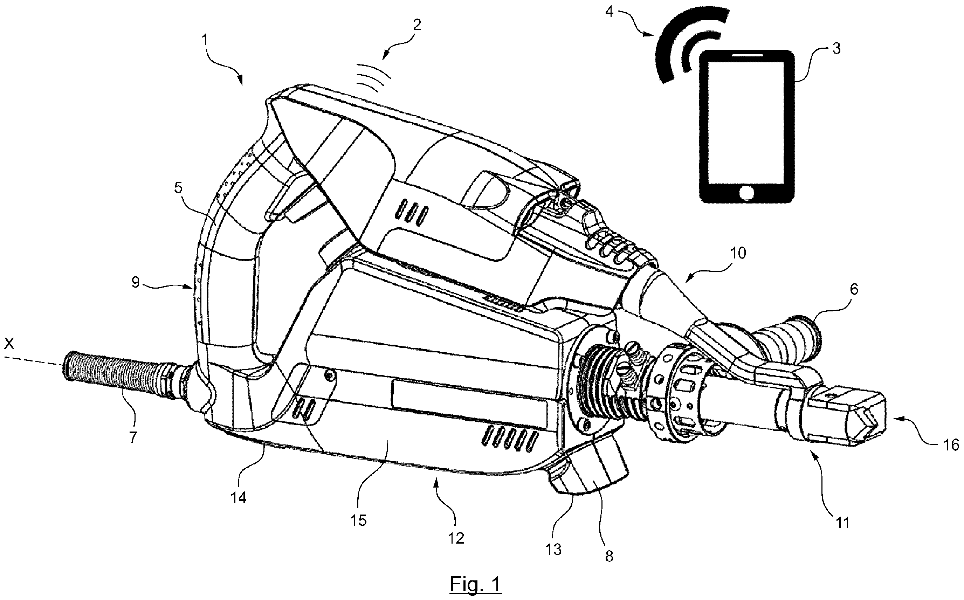

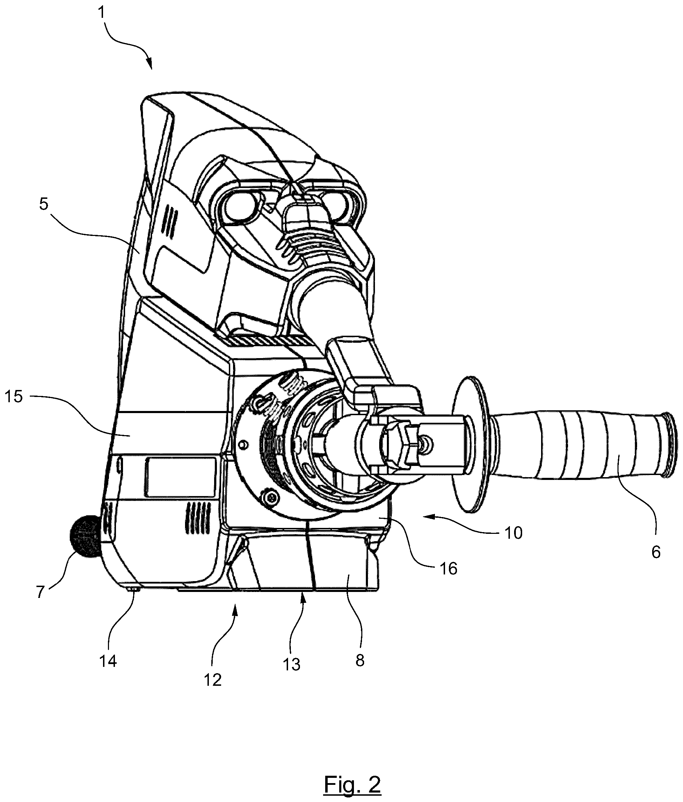

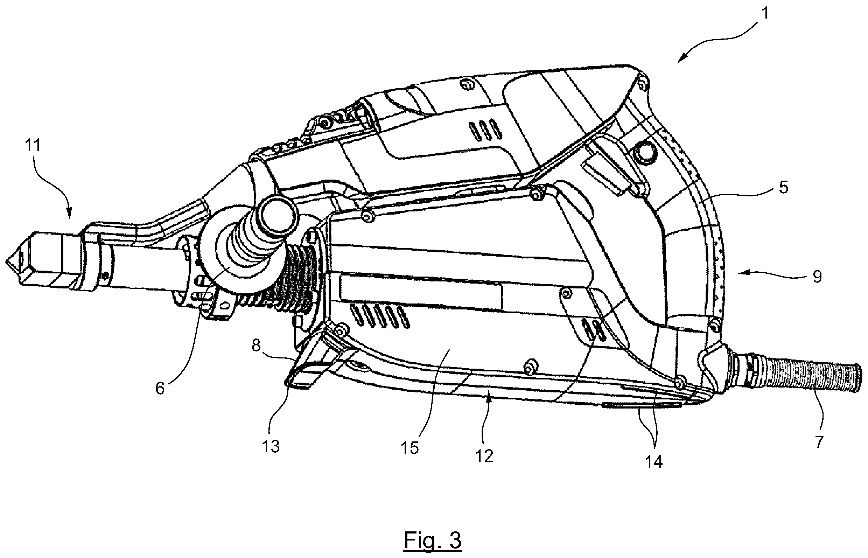

Bei der in den Figuren 1 bis 3 gezeigten Ausführungsform einer erfindungsgemäßen Handschweißextruderanordnung sind ein Handschweißextruder 1 und ein Endgerät 3 vorgesehen, die über komplementäre Datenschnittstellen 2, 4, die beispielsweise als Bluetooth-Schnittstellen ausgebildet sein können, in Verbindung stehen. Das Endgerät 3 ist als ein Smartphone oder ein Tablet ausgebildet. Die über die komplementären Schnittstellen 2, 4 ausgebildete Datenverbindung ist nicht auf drahtlose Verbindungen wie beispielsweise Bluetooth oder WLAN beschränkt und kann grundsätzlich auch eine drahtgebundene Verbindung aufweisen, beispielsweise einen USB-Anschluss.

Der Handschweißextruder 1 weist ein Gehäuse 15 auf, welches insgesamt vier Bediengriffe 5, 6, 7, 8 aufweist, die zu zwei Sätzen Bediengriffen 5, 6 und 7, 8 zusammengefasst sind und dadurch die beidhändige Bedienung in zwei um 180° um die Längsachse x des Handschweißextruders 1 zueinander verdrehten Ausrichtungen des Handschweißextruders 1 ermöglichen.

In Figur 1 ist der Handschweißextruder 1 in einer aufrechten Position gezeigt. Um den Handschweißextruder 1 in dieser Ausrichtung zu bedienen, kann von einem Bediener, der Rechtshänder ist, mit der rechten Hand der erste Bediengriff 5 und mit der linken Hand der zweite Bediengriff 6 gegriffen werden, um den Handschweißextruder 1 in der in Figur 1 gezeigten aufrechten Ausrichtung prozesssicher halten zu können. Für einen Wechsel von Rechtshänderbedienung auf Linkshänderbedienung kann der zweite Bediengriff 6 um 180° auf die gegenüberliegende Längsseite des Gehäuses 15 verschwenkt und dort arretiert werden.

Darüber hinaus weist der Handschweißextruder 1 einen zweiten Satz Bediengriffe 7, 8 für die Bedienung des Handschweißextruders 1 in einer um 180° um die Längsachse x des Handschweißextruders zu der in Figur 1 gezeigten Ausrichtung verdrehten Position. Dazu kann der Bediener je nachdem, ob er Links- oder Rechtshänder ist, mit der linken oder der rechten Hand den ersten Bediengriff 7 und mit der jeweils anderen Hand den zweiten Bediengriff 8 halten, um den Handschweißextruder 1 betriebssicher zu führen.

Der an der unteren Längsseite 12 des Handschweißextruders 1 angeordnete zweite Bediengriff 8 weist eine Auflagefläche 13 auf, die mit einer weiteren Auflagefläche 14 der Aufstandsseite des Handschweißextruders 1 in einer die untere Längsseite 12 und Aufstandsseite bildenden gemeinsamen Ebene liegt.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

### Bezugszeichenliste:

- 1: Handschweißextruder
- 2: Datenschnittstelle
- 3: Endgerät
- 4: Komplementäre Datenschnittstelle
- 5: erster Bediengriff des ersten Satzes
- 6: zweiter Bediengriff des ersten Satzes
- 7: erster Bediengriff des zweiten Satzes
- 8: zweiter Bediengriff des zweiten Satzes
- 9: Hinterseite
- 10: Längsseite
- 11: Extruderausgang
- 12: Längsseite
- 13: Auflagefläche
- 14: weitere Auflagefläche
- 15: Gehäuse
- 16: Vorderseite
- x: Längsachse

## Patentansprüche

1. Handschweißextruderanordnung mit einem Handschweißextruder (1) für das stoffschlüssige Verbinden thermoplastischer Bauteile, **dadurch gekennzeichnet, dass** der Handschweißextruder (1) eine bidirektionale Datenschnittstelle (2) für die drahtlose oder drahtgebundene bidirektionale Kommunikation mit einem Endgerät (3) aufweist.

2. Handschweißextruderanordnung nach Anspruch 1, die weiterhin ein Endgerät (3) mit einer zu der Datenschnittstelle (2) komplementären Datenschnittstelle (4) aufweist, wobei das Endgerät (3) vorzugsweise ein Personal Computer, ein Laptop, oder ein Smartphone ist.

3. Handschweißextruderanordnung nach einem der vorangegangenen Ansprüche, die für die Überwachung eines von dem Handschweißextruder (1) ausgeführten Schweißprozesses eingerichtet ist, wozu mindestens ein Datensatz aufweisend mindestens eines von Schweißparameter, Betriebsparameter und Umgebungsparameter zwischen dem Handschweißgerät und dem Endgerät (3) kommuniziert ist.

4. Handschweißextruderanordnung nach Anspruch 3, bei der auf dem Endgerät (3) eine Applikation ausgeführt ist, die dazu eingerichtet ist, den Datensatz von dem Endgerät (3) an den Handschweißextruder (1) zu übertragen.

5. Handschweißextruderanordnung nach Anspruch 3 oder 4, bei der auf dem Endgerät (3) eine Applikation ausgeführt ist, die dazu eingerichtet ist, den Datensatz über die Datenschnittstelle (2, 4) bei dem Handschweißextruder (1) anzufordern und von dem Handschweißextruder (1) an das Endgerät (3) zu übertragen.

6. Handschweißextruderanordnung nach einem der vorangegangenen Ansprüche, bei der auf dem Endgerät (3) eine Applikation ausgeführt ist, die dazu eingerichtet ist, einen Datensatz von dem Endgerät (3) an den Handschweißextruder (1) zu übertragen, der mindestens einen Steuerbefehl zur Ansteuerung des Handschweißextruders (1) aufweist.

7. Handschweißextruderanordnung nach einem der vorangegangenen Ansprüche, bei der der Steuerbefehl zur Ansteuerung des Handschweißextruders (1) eine Soll-Temperatur oder eine Soll-Lüfterdrehzahl eines Vorwärmgebläses des Handschweißextruder (1) aufweist.

8. Handschweißextruderanordnung nach einem der vorangegangenen Ansprüche, bei der der Handschweißextruder (1) und/oder das Endgerät (3), vorzugsweise eine auf dem Endgerät (3) ausgeführte Applikation, dazu eingerichtet ist, kontinuierlich oder über einen definierten Zeitraum während eines Schweißprozesses Prozessparameter und gegebenenfalls weitere Prozessdaten aufzuzeichnen und in einem Speicher für den Abruf im Nachgang zum Schweißprozess zu hinterlegen.

9. Handschweißextruderanordnung nach einem der vorangegangenen Ansprüche, bei der der Handschweißextruder (1) an ein externes und bedarfsweise mit dem Handschweißextruder (1) koppelbares Speichermedium angeschlossen ist, wobei vorzugsweise das Speichermedium eine Speicherkarte ist und der Handschweißextruder (1) einen Speicherkartenleser aufweist, in den die Speicherkarte wahlweise eingesteckt werden kann, um die Speicherkarte für einen Lese- und/oder Schreibvorgang mit dem Handschweißextruder (1) zu koppeln.

10. Handschweißextruderanordnung nach einem der vorangegangenen Ansprüche, bei der der Handschweißextruder (1) an einem Extruderausgang (11) eine Lichtquelle mit einstellbarer Lichtintensität aufweist, wobei ein Lichtaustritt der Lichtquelle in Richtung einer zu erzeugenden Schweißnaht geöffnet ist, wobei die Lichtquelle vorzugsweise eine Dual-LED-Beam-Beleuchtung ist oder aufweist.

11. Handschweißextruderanordnung nach einem der vorangegangenen Ansprüche, bei der der Handschweißextruder (1) für die beidhändige Bedienung in zwei um 180° um die Längsachse (x) des Handschweißextruders (1) zueinander verdrehten Ausrichtungen ausgelegt ist, wozu der Handschweißextruder (1) einen ersten Satz von zwei Bediengriffen (5, 6) für die beidhändige Bedienung und einen zweiten Satz von zwei Bediengriffen (7, 8) für die beidhändige Bedienung aufweist.

12. Handschweißextruderanordnung nach Anspruch 11, bei der der erste Satz von zwei Bediengriffen (5, 6) einen ersten Bediengriff (5) an einer von dem Extruderausgang (11) abgewandten Hinterseite (9) des Handschweißextruders (1) und einen zweiten sich von einer seitlichen Längsseite (10) ersteckenden Bediengriff (6) aufweist.

13. Handschweißextruderanordnung nach Anspruch 11 oder 12, bei der der zweite Satz von zwei Bediengriffen (7, 8) einen ersten Bediengriff (7), der sich von einer von dem Extruderausgang (11) abgewandten Hinterseite (9) des Handschweißextruders (1) erstreckt, und einen zweiten Bediengriff (8) aufweist, der an einer unteren Längsseite (12) und Aufstandsseite des Handschweißextruders (1) angeordnet ist.

14. Handschweißextruderanordnung nach Anspruch 13, bei der der an der unteren Längsseite (12) und Aufstandsseite des Handschweißextruders (1) angeordnete zweite Bediengriff (8) eine Auflagefläche (13) aufweist, die mit mindestens einer weiteren Auflagefläche (14) der Aufstandsseite in einer die untere Längsseite (12) und Aufstandsseite bildenden gemeinsamen Ebene liegt.

15. Handschweißextruderanordnung nach Anspruch 13 oder 14, bei der der an der Längsseite (12) und Aufstandsseite des Handschweißextruders (1) angeordnete zweite Bediengriff (8) an einem Übergang zwischen der Aufstandsseite und einer Vorderseite (16) des Handschweißextruders (1), die den Extruderausgang (11) aufweist, angeordnet ist.
